# EUROPEAN PATENT SPECIFICATION

(11) **EP 2 981 748 B1**
(45) Date of publication and mention of the grant of the patent: **07.08.2019**
(21) Application number: 14715003.1
(22) Date of filing: 02.04.2014
(51) Int. Cl.: F16L 29/04

(54) **RELEASABLE COUPLING FOR A GAS DISTRIBUTION LINE OF A SYSTEM FOR REFUELLING MOTOR VEHICLES**
TRENNBARE KUPPLUNG FÜR EINE GASVERTEILUNGSLEITUNG EINES SYSTEMS ZUR BETANKUNG VON KRAFTFAHRZEUGEN
RACCORDEMENT DÉTACHABLE POUR UNE LIGNE DE DISTRIBUTION DE GAZ D'UN SYSTÈME DE RAVITAILLEMENT EN CARBURANT POUR VÉHICULES À MOTEUR

(30) Priority: 05.04.2013 IT MI20130526
(43) Date of publication of application: 10.02.2016
(73) Proprietor: Alfa Gomma S.p.A., 20059 Vimercate (Monza Brianza) (IT)
(72) Inventor: GENNASIO, Enrico, I-20871 Vimercate (Monza Brianza) (IT); MAZZOLI, Stefano, I-20883 Mezzago (Monza Brianza) (IT); DOI, Rinaldo, I-26833 Merlino (Lodi) (IT)
(74) Representative: Rapisardi, Mariacristina
(86) International application number: PCT/EP2014/056620
(87) International publication number: WO 2014/161900

(56) References cited:
- GB-A- 1 164 126
- US-A- 2 705 652

## Description

The present invention relates to a releasable coupling for a gas distribution line of a system for refuelling motor vehicles.

As is well known, when the type of fuel dispensed is highly inflammable, it is necessary to equip the dispenser with special safety devices aimed at preventing uncontrolled fuel leaks in the event that the hose which supplies fuel to the tank of a vehicle is dragged off. This situation typically occurs when an absent-minded user inadvertently starts driving the vehicle again while the fuel dispensing hose is still connected to the tank of the vehicle.

Despite enabling a correct isolation of the supply line, the safety devices present on the market have a drawback in that due to the dragging effect they undergo permanent deformation and damage precluding their subsequent use.

The technical task that the present invention sets itself is thus to realize a releasable coupling for a gas distribution line of a system for refuelling motor vehicles which enables the aforementioned technical drawbacks of the prior art to be overcome.

Within the scope of this technical task, one object of the invention is to realize a releasable coupling for a gas distribution line of a system for refuelling motor vehicles that can safely and effectively intervene without being damaged so as to be reusable. A similar coupling is shown for example in document US2705652.

The technical task, as well as these and other objects, according to the present invention, are achieved by realizing a releasable coupling for a gas distribution line of a system for refuelling motor vehicles, comprising a first half-part and a second half-part that are reciprocally engageable, characterized in that said first half-part comprises a longitudinal valve body having a shutter that is axially movable in contrast to and by action of an elastic element, a cylindrical sleeve that is threaded internally for fastening said first half-part to said second half-part, and an enclosing support of said sleeve keyed on said valve body, said sleeve being divided into a plurality of distinct and separate cylinder sectors that are oscillatable for the release of the second half-part, each sector subtending an angle no greater than 90°.

Preferably, the sectors are identical and there are six of them. This construction has in fact demonstrated to be an advantageous compromise between the need to assure the continuity of the thread so as to enable the two half-parts making up the coupling to be screwed together and the need to enable an oscillation of the sectors without reciprocal interference so as to release the two half-parts making up the coupling in the event of dragging.

Other features of the present invention are defined, moreover, in the subsequent claims.

Additional features and advantages of the invention will be more apparent from the description of a preferred but non-exclusive embodiment of the releasable coupling for a gas distribution line of a system for refuelling motor vehicles according to the invention, illustrated by way of non-restrictive example in the appended drawings, in which:

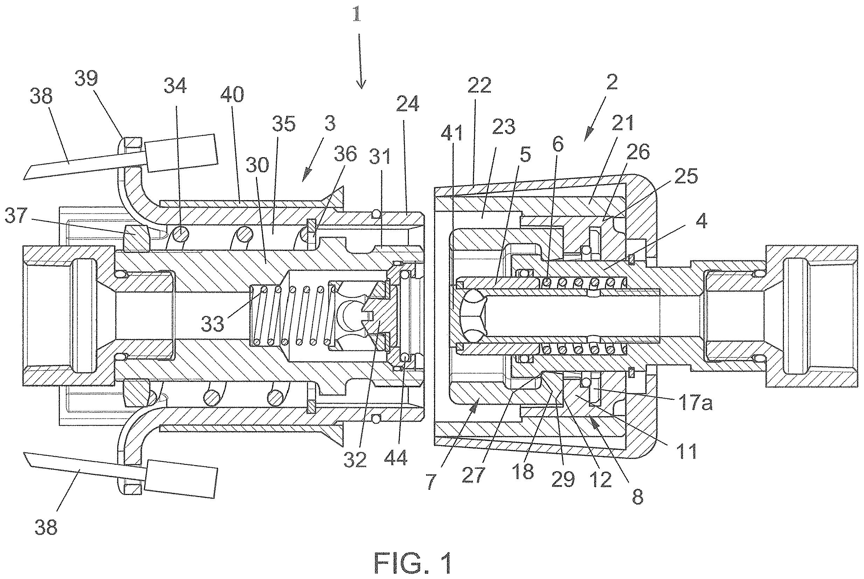

figure 1 shows an axial section view of the coupling in the release condition;

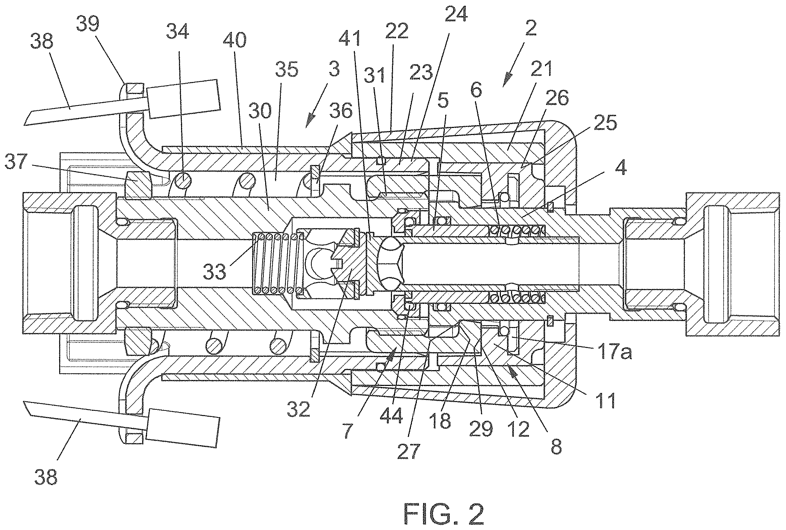

figure 2 shows an axial section view of the coupling in a retaining condition;

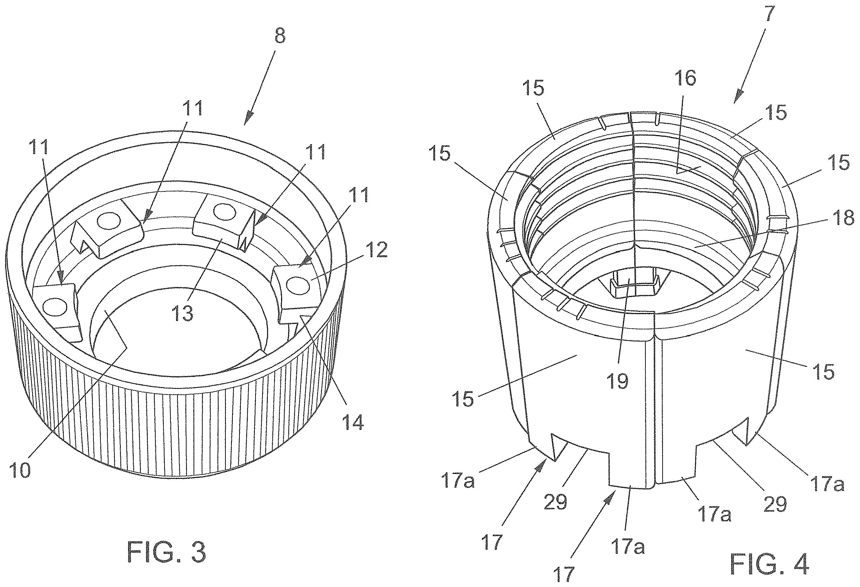

figure 3 shows the sleeve with sectors; and
figure 4 shows the body enclosing the sleeve with sectors.

With reference to the aforementioned figures, there is shown a releasable coupling for a gas distribution line of a system for refuelling motor vehicles indicated overall with the reference number 1.

The coupling comprises a first half-part 2 and a second half-part 3 that are reciprocally engageable.

The first half-part 2 comprises a longitudinal valve body 4 having a shutter 5 that is axially movable in contrast to and by action of an elastic element 6, a sleeve 7 that is threaded internally for fastening the first half-part to the second half-part 3, and an enclosing support 8 for the sleeve 7.

The elastic element 6 is in particular a helical spring.

The enclosing support 8 comprises a cylindrical wall 9 having an internal base flange 10 and a plurality of internal radial protrusions 11 positioned at a distance from the base flange 10 and distributed along the internal perimeter of the cylindrical wall 9.

In particular, the protrusions 11, identical to one another, are distributed in an equally angularly spaced manner along an internal perimeter circumference of the cylindrical wall 9 of the enclosing support 8.

The protrusions 11 have a flat surface 12 which extends in a plane perpendicular to the axis of the cylindrical wall 9 of the enclosing support 8, and a lateral surface 13 configured as a cylindrical sector coaxial with the cylindrical wall 9 and provided with a recess 14 that extends for the entire angular extent of the lateral surface 13.

The enclosing support 8 is keyed on the valve body 4 in a manner we shall see below in detail.

The sleeve 7, having a cylindrical configuration, is divided into a plurality of distinct and separate cylinder sectors 15 that are oscillatable for the release of the second half-part 3.

Each sector 15 subtends an angle no greater than 90°.

In particular, the sectors 15 are identical to one another and are provided in a number of six.

Each sector 15 thus has an angular amplitude of 60°.

The sleeve 7 has an internal thread 16 in an apical portion thereof and in a base portion thereof has feet 17 interposed between the radial protrusions 11.

The sleeve 7 projects out from the cylindrical wall 9 of the enclosing support 8 in an axial direction, at least for the entire axial extension of the apical threaded portion thereof.

The sleeve 7 further has an inner shoulder 18, which separates the base portion, where the feet 17 are present, from the apical portion having a larger inner diameter where the thread 16 is present.

In order to key the enclosing support 8 on the valve body 4 so as to prevent axial sliding, there is provided a locking ring 28 keyed fixedly onto the valve body 4 and interfering with the base flange 10, and an external shoulder 27 of the valve body 4 interfering with the inner shoulder 18 of the sleeve 7.

The base portion of the sleeve 7 has an inner cone-shaped lateral tapered delimiting surface, whereas the inner shoulder 18 of the sleeve 7 has a bevelled edge.

The taper of the base portion of the sleeve 7 and the bevelled edge of the inner shoulder 18 of the sleeve 7 serve to facilitate the oscillation of the sectors 16, as we shall see.

The feet 17 have an external lateral delimiting surface lying along the external cylindrical generatrices of the sleeve 7 and an internal lateral delimiting surface lying along the internal conical generatrices of the base portion of the sleeve 7. Each foot 17 is made up of adjacent half-parts 17a, 17a provided at the base of two adjacent sectors 15.

Each sector 15 therefore has, at the sides of the base, two spaced half-parts 17a, each matching a half-part 17a of an adjacent sector 15 so as to form a foot 17. The delimiting wall 29 of the top of the space present between the two half-parts 17a of each foot 17 rests upon the surface 12 of a corresponding protrusion 11 of the enclosing body 8.

On their internal lateral delimiting surface, the feet 17 have a groove 19 aligned with the recess 14 of the lateral surface 13 of the protrusions 11.

A ring 20 for blocking axial slipping of the sleeve 7 off the enclosing support 8 is inserted in the grooves 19 and recesses 14.

The enclosing body 8 is housed in a guide bushing 21 which has an axial extent such as to entirely contain within it the assembly made up of the enclosing support 8 and the sleeve 7 positioned therein, and in particular the end of the apical portion of the sleeve 7 is positioned rearward relative to the apical end of the guide bushing 21.

Together with the sleeve 7, the guide bushing 21 delimits an annular cavity 23 into which a tubular engagement element 24 provided on the second half-part 3 of the coupling 1 can be introduced.

The guide bushing 21 is in turn entirely housed in a supporting receptacle 22 keyed on the valve body 4.

In particular, the guide bushing 21 has an inner shoulder 25 interfering with an external shoulder 26 of the enclosing body 8, which secures it against the bottom of the supporting receptacle 22.

The second half-part 3 comprises a longitudinal valve body 30, which externally supports the tubular element 24 so as to be axially movable in contrast to and by action of an elastic element 34 consisting, in particular, of a helical spring.

The valve body 30 has an external thread 31 for engagement with the sleeve 7 and a shutter 32 that is axially movable in contrast to and by action of an elastic element 33 consisting, in particular, of a helical spring.

The elastic element 34 is positioned in an annular cavity 35 defined between the tubular element 24 and the valve body 30 and has one end interfering with a locking ring 36 fixed along the inner perimeter of the tubular element 24 and one end interfering with a locking ring 37 fixed along the outer perimeter of the valve body 30.

The tubular element 24 has a covering element 40 that covers it up to a rearward position relative to the head end thereof.

The tubular element 24 is further provided, at a base flange 39 thereof, with special pull rods 38 for the actuation thereof.

The joining of the two half-parts 2, 3 of the coupling 1 takes place in the following manner.

Initially, when the half-parts 2 and 3 are separate, the shutters 5 and 32, respectively, as a result of the action of the elastic elements 6 and 33, respectively, are in a position of closing the valve bodies 4 and 30, respectively.

As a result of an action on the pull rods 38, the tubular element 24 is made to translate until exposing the thread 31 of the valve body 30, which can thus be screwed into the sleeve 7. In this phase the elastic element 34 is loaded.

While the valve body 30 is being screwed into sleeve 7, the head of a stem 41 integral with the valve body 4 intercepts the shutter 32, exerting upon it a thrust that overcomes the reaction of the elastic element 33: the shutter 32 is thus made to move rearward, with a consequent opening of the valve body 30.

At the same time a cup 42 integral with the valve body 32 intercepts the shutter 5, exerting upon it a thrust that overcomes the reaction of the elastic element 6: the shutter 5 is thus made to move rearward, with a consequent opening of the valve body 4. The cup 42 is sealingly connected with the shutter 5 by means of a sealing gasket 44.

The rearward movement of the shutters 5 and 32 ultimately determines the opening of the passage of fuel between the two half-parts 2 and 3 of the coupling 1.

When the pull rods38 are released, the exposed head of the tubular element 24 is inserted into the cavity 23 as a result of the thrust exerted by the elastic element 34, which is unloaded.

The travel of the tubular element 24 stops when the end of the covering head 40 is intercepted by the head end of the bushing 21.

In the event of a pulling force beyond a certain threshold, the coupling 1 enables a safe disconnection between the two half-parts 2 and 3 thereof, since the sectors 15 undergo an oscillation that determines a radial expansion of the threaded head portion of the sleeve 7 and the consequent disengagement of the thread 31 of the valve body 30 from the thread of the sleeve 7.

The fulcrum of oscillation of the sectors 15 relative to the valve body 4 is substantially provided by the external shoulder 27 of the valve body 4 on which the inner shoulder 18 of the individual sectors 15 rotates. This rotation is made possible thanks both to the bevelled edge of the inner shoulder 18 of the individual sectors 15, which avoids jamming, and the internal lateral surface delimiting the base portion of the individual sectors 15, which, having a cone-shaped taper 45 as noted above, does not interfere with the external lateral surface of the valve body 4 during rotation of the individual sectors 15.

The preferred application envisages liquid propane gas as the gas of the system for refuelling motor vehicles.

The coupling thus conceived is susceptible of numerous modifications and variants, all falling within the scope of the inventive concept; moreover, all the details may be replaced with other technically equivalent ones.

In practice, all of the materials used, as well as the dimensions, can be any whatsoever according to need and the state of the art.

## Claims

1. A releasable coupling (1) for a gas distribution line of a system for refuelling motor vehicles, comprising a first half-part (2) and a second half-part (3) that are reciprocally engageable, wherein said first half-part (2) comprises a longitudinal valve body (4) having a shutter (5) that is axially movable in contrast to and by action of an elastic element (6), a cylindrical sleeve (7) that is threaded internally in an apical portion thereof for fastening said first half-part (2) to said second half-part (3), and an enclosing support (8) of said sleeve (7) keyed on said valve body (4), said sleeve (7) being divided into a plurality of distinct and separate cylinder sectors (15) that are oscillatable for the release of the second half-part (3), each sector (15) subtending an angle no greater than 90°, **characterised in that** the enclosing support (8) is housed in a guide bushing (21) having an axial extent such as to entirely contain, within the guide bushing (21), the assembly made up of the enclosing support (8) and the sleeve (7) positioned therein, an end of the apical portion of the sleeve (7) being positioned rearward relative to an apical end of the guide bushing (21).

2. The coupling (1) according to claim 1, **characterised in that** said sectors (15) are identical.

3. The coupling (1) according to claim 2, **characterised in that** there are six of said sectors (15).

4. The coupling (1) according to any one of the preceding claims, **characterised in that** said enclosing support (8) comprises a cylindrical wall (9) having an internal base flange (10) and a plurality of internal radial protrusions (11) positioned at a distance from the base flange (10) and distributed along the internal perimeter of said cylindrical wall (9).

5. The coupling (1) according to the preceding claim, **characterised in that** said sleeve (7) has feet (17) interposed between said radial protrusions (11) and having an internal groove (19) wherein a ring (20) is positioned for blocking axial slipping of the sleeve (7) off the enclosing support (8).

6. The coupling (1) according to any one of the preceding claims, **characterised in that** said radial protrusions (11) provide a flat resting surface (12) for the sectors (15).

7. The coupling (1) according to any of claims 4 to 6, **characterised in that** said sleeve (7) projects out in an axial direction from said cylindrical wall (9) at least for the entire axial extension of the threaded portion thereof.

8. The coupling (1) according to any one of the preceding claims, **characterised in that** said sleeve (7) has an inner shoulder (18) interfering with an external shoulder (27) of said valve body (4).

9. The coupling (1) according to the preceding claim, **characterised in that** said sleeve (7) has a base portion having a cone-shaped internal tapering (45).

10. The coupling (1) according to the preceding claim, **characterised in that** said internal shoulder (18) of the sleeve (7) has a bevelled edge.

11. The coupling (1) according to claim 4 and 10, **characterised in that** said base flange (10) is interfering with a locking ring (28) keyed on said valve body (4).

12. The coupling (1) according to any one of the preceding claims, **characterised in that** said second half-part (3) comprises a longitudinal valve body (30) having an external thread (31) for engagement with said sleeve (7) and a shutter (32) that is axially movable in contrast to and by action of an elastic element (33).

13. A system having a gas distribution line for the refuelling of motor vehicles, **characterised in that** it comprises a releasable coupling (1) according to any one of the preceding claims.

## Patentansprüche

1. Trennbare Kupplung (1) für eine Gasverteilungsleitung eines Systems zur Betankung von Kraftfahrzeugen, umfassend einen ersten Halbteil (2) und einen zweiten Halbteil (3), die gegenseitig eingreifbar sind, wobei der erste Halbteil (2) einen Längsventilkörper (4) umfasst, aufweisend eine Verschlussklappe (5), die axial im Gegensatz zu und durch die Wirkung von einem elastischen Element (6) bewegbar ist, eine zylindrische Hülse (7), die in einem an ihrer Spitze befindlichen Abschnitt innenseitig ein Gewinde aufweist, um den ersten Halbteil (2) am zweiten Halbteil (3) zu befestigen, und eine Einhausungshalterung (8) für die Hülse (7), die auf dem Ventilkörper (4) verkeilt ist, wobei die Hülse
(7) in eine Vielzahl an unterschiedlichen und separaten Zylindersektoren (15) geteilt ist, die für die Freigabe des zweiten Halbteils (3) schwenkbar sind, wobei ein jeder Sektor (15) einen Winkel schneidet, der nicht größer als 90° ist, **dadurch gekennzeichnet, dass** die Einhausungshalterung (8) in einer Führungsbuchse (21) untergebracht ist, aufweisend eine axiale Ausdehnung, sodass innerhalb der Führungsbuchse (21) die Anordnung, bestehend aus der Einhausungshalterung (8) und der darin positionierten Hülse (7) enthalten ist, wobei ein Ende des an der Spitze befindlichen Abschnitts der Hülse (7) rückseitig relativ zu einem an der Spitze befindlichen Ende der Führungsbuchse (21) positioniert ist.

2. Kupplung (1) nach Anspruch 1, **dadurch gekennzeichnet, dass** die Sektoren (15) identisch sind.

3. Kupplung (1) nach Anspruch 2, **dadurch gekennzeichnet, dass** sechs dieser Sektoren (15) bereitgestellt sind.

4. Kupplung (1) nach einem der vorhergehenden Ansprüche, **dadurch gekennzeichnet, dass** die Einhausungshalterung (8) eine zylindrische Wand (9) umfasst, aufweisend einen internen Basisflansch (10) und eine Vielzahl an internen radialen Vorsprüngen (11), die in einem Abstand vom Basisflansch (10) positioniert und entlang des internen Umfangs der zylindrischen Wand (9) verteilt sind.

5. Kupplung (1) nach dem vorhergehenden Anspruch, **dadurch gekennzeichnet, dass** die Hülse (7) Füße (17) aufweist, die zwischen den radialen Vorsprüngen (11) eingefügt sind, und aufweisend eine interne Nut (19), in der ein Ring (20) positioniert ist, um das axiale Gleiten der Hülse (7) aus der Einhausungshalterung (8) zu blockieren.

6. Kupplung (1) nach einem der vorhergehenden Ansprüche, **dadurch gekennzeichnet, dass** die radialen Vorsprünge (11) eine flache Auflageoberfläche (12) für die Sektoren (15) bereitstellen.

7. Kupplung (1) nach einem der Ansprüche 4 bis 6, **dadurch gekennzeichnet, dass** die Hülse (7) in einer axialen Richtung aus der zylindrischen Wand (9) mindestens für die gesamte axiale Ausdehnung deren Gewindeabschnitts austritt.

8. Kupplung (1) nach einem der vorhergehenden Ansprüche, **dadurch gekennzeichnet, dass** die Hülse (7) eine Innenschulter (18) aufweist, die mit einer Außenschulter (27) des Ventilkörpers (4) interferiert.

9. Kupplung (1) nach dem vorhergehenden Anspruch, **dadurch gekennzeichnet, dass** die Hülse (7) einen Basisabschnitt aufweist, aufweisend eine kegelförmige innere Verjüngung (45).

10. Kupplung (1) nach dem vorhergehenden Anspruch, **dadurch gekennzeichnet, dass** die Innenschulter (18) der Hülse (7) eine abgeschrägte Kante aufweist.

11. Kupplung (1) nach Anspruch 4 und 10, **dadurch gekennzeichnet, dass** der Basisflansch (10) mit einem Verriegelungsring (28) interferiert, der auf dem Ventilkörper (4) verkeilt ist.

12. Kupplung (1) nach einem der vorhergehenden Ansprüche, **dadurch gekennzeichnet, dass** der zweite Halbteil (3) einen Längsventilkörper (30) umfasst, aufweisend ein Außengewinde (31) für den Eingriff mit der Hülse (7) und eine Verschlussklappe (32), die axial im Gegensatz zu und durch die Wirkung von einem elastischen Element (33) bewegbar ist.

13. System, aufweisend eine Gasverteilungsleitung zur Betankung von Kraftfahrzeugen, **dadurch gekennzeichnet, dass** es eine trennbare Kupplung (1) nach einem der vorhergehenden Ansprüche umfasst.

## Revendications

1. Raccordement détachable (1) pour une ligne de distribution de gaz d'un système de ravitaillement en carburant pour véhicules à moteur, comprenant une première moitié (2) et une seconde moitié (3) pouvant se mettre en prise réciproquement, dans lequel ladite première moitié (2) comprend un corps de vanne (4) longitudinal comportant un obturateur (5) étant axialement mobile en opposition à, et par l'action d'un élément élastique (6), un manchon cylindrique (7) étant fileté à l'intérieur de sa partie apicale pour fixer ladite première moitié (2) à ladite seconde moitié (3), et un support de clôture (8) dudit manchon (7) calé sur ledit corps de vanne (4), ledit manchon (7) étant divisé en une pluralité de secteurs de cylindre (15) distincts et séparés pouvant osciller pour le détachement de la seconde moitié (3), chaque secteur (15) sous-tendant un angle non supérieur à 90°, **caractérisé en ce que** le support de clôture (8) est logé dans une bague de guidage (21) comportant une extension axiale de sorte à contenir entièrement, à l'intérieur de la bague de guidage (21), l'assemblage constitué du support de clôture (8) et du manchon (7) positionnés en son sein, une extrémité de la partie apicale du manchon (7) étant positionnée vers l'arrière par rapport à une extrémité apicale de la bague de guidage (21).

2. Raccordement (1) selon la revendication 1, **caractérisé en ce que** lesdits secteurs (15) sont identiques.

3. Raccordement (1) selon la revendication 2, **caractérisé en ce qu'**il y a six desdits secteurs (15) .

4. Raccordement (1) selon l'une quelconque des revendications précédentes, **caractérisé en ce que** ledit support de clôture (8) comprend une cloison cylindrique (9) comportant une bride de base (10) interne et une pluralité de saillies radiales (11) internes positionnées à une certaine distance de la bride de base (10) et réparties le long du périmètre interne de ladite cloison cylindrique (9).

5. Raccordement (1) selon la revendication précédente, **caractérisé en ce que** ledit manchon (7) comporte des pieds (17) interposés entre lesdites saillies radiales (11) et comportant une rainure interne (19) dans laquelle est positionné un anneau (20) pour bloquer le coulissement axial du manchon (7) à partir du support de clôture (8).

6. Raccordement (1) selon l'une quelconque des revendications précédentes, **caractérisé en ce que** lesdites saillies radiales (11) fournissent une surface d'appui (12) plate aux secteurs (15).

7. Raccordement (1) selon l'une quelconque des revendications de 4 à 6, **caractérisé en ce que** ledit manchon (7) dépasse dans une direction axiale de ladite cloison cylindrique (9) au moins sur toute l'extension axiale de sa partie filetée.

8. Raccordement (1) selon l'une quelconque des revendications précédentes, **caractérisé en ce que** ledit manchon (7) comporte un épaulement interne (18) interférant avec un épaulement externe (27) dudit corps de vanne (4).

9. Raccordement (1) selon la revendication précédente, **caractérisé en ce que** ledit manchon (7) comporte une partie de base comportant un rétrécissement interne (45) conique.

10. Raccordement (1) selon la revendication précédente, **caractérisé en ce que** ledit épaulement interne (18) du manchon (7) comporte un bord biseauté.

11. Raccordement (1) selon les revendications 4 et 10, **caractérisé en ce que** ladite bride de base (10) interfère avec une bague de blocage (28) calée sur ledit corps de vanne (4).

12. Raccordement (1) selon l'une quelconque des revendications précédentes, **caractérisé en ce que** ladite seconde moitié (3) comprend un corps de vanne (30) longitudinal comportant un filetage (31) extérieur pour la mise en prise avec ledit manchon (7) et un obturateur (32) étant mobile axialement en opposition à, et par l'action d'un élément élastique (33) .

13. Système comportant une ligne de distribution de gaz pour le ravitaillement en carburant de véhicules à moteur, **caractérisé en ce qu'**il comprend un raccordement détachable (1) selon l'une quelconque des revendications précédentes.
